# EUROPEAN PATENT SPECIFICATION

(11) **EP 4 601 061 B1**
(45) Date of publication and mention of the grant of the patent: **22.07.2026**
(21) Application number: 24221478.1
(22) Date of filing: 19.12.2024
(51) Int. Cl.: H01M 10/0525, H01M 10/0567, H01M 10/0568, H01M 10/0569, H01M 4/133, H01M 4/136, H01M 4/58

(54) **LITHIUM-ION BATTERY ELECTROLYTE, LITHIUM-ION BATTERY AND ELECTRONIC DEVICE**
ELEKTROLYT FÜR LITHIUM-IONEN-BATTERIE, LITHIUM-IONEN-BATTERIE UND ELEKTRONISCHE VORRICHTUNG
ÉLECTROLYTE DE BATTERIE AU LITHIUM-ION, BATTERIE AU LITHIUM-ION ET DISPOSITIF ÉLECTRONIQUE

(30) Priority: 07.02.2024 CN 202410176234
(43) Date of publication of application: 13.08.2025
(73) Proprietor: AESC Japan Ltd., Kanagawa, 2520012 (JP)
(72) Inventor: YU, Le, Pudong New Area Shanghai 201315 (CN); LI, Qian, Pudong New Area Shanghai 201315 (CN); WANG, Renhe, Pudong New Area Shanghai 201315 (CN); YAN, Bo, Pudong New Area Shanghai 201315 (CN)
(74) Representative: Becker, Eberhard

(56) References cited:
- EP-A1- 4 394 990
- CN-B- 110 752 408
- CN-B- 115 548 445
- SMART M. C. ET AL: "Electrolytes for Low-Temperature Lithium Batteries Based on Ternary Mixtures of Aliphatic Carbonates", vol. 146, no. 2, 1 February 1999 (1999-02-01), pages 486 - 492, XP093266911, ISSN: 0013-4651, Retrieved from the Internet <URL:https://iopscience.iop.org/article/10.1149/1.1391633/pdf> [retrieved on 20250404], DOI: 10.1149/1.1391633

## Description

### BACKGROUND

### Technical Field

The disclosure relates to the technical field of power batteries, and specifically to a lithium-ion battery electrolyte, a lithium-ion battery and an electronic device.

### Description of Related Art

As a power supply for electrical drive systems, lithium-ion batteries are commonly adopted in electric vehicles, electric bicycles, and power tools. As lithium-ion batteries are characterized in high energy density, long service life, and fast charging ability, currently they are used as the core component of electrical drive systems.

Compared with other types of power batteries, lithium-ion batteries have significantly higher energy density, but high energy density might cause safety concern and has life cycle problems. Especially when lithium-ion batteries are fully charged, the lithium-ion battery itself is in a high-temperature environment. The reactivity of the positive and negative electrodes inside the battery and the electrolyte are further enhanced under the high-temperature environment, resulting in a significant increase in the heat release from the reaction and the production of a large amount of gas, which may easily cause the volume of the lithium-ion battery to expand. In extreme cases, an internal short circuit might occur, which dramatically affects the safety in the use of lithium-ion batteries. CN 110 752 408 B discloses an electrolyte, a preparation method thereof and a lithium ion battery, wherein the electrolyte comprises: solvents, lithium salts, and additives; wherein the solvent consists of a cyclic carbonate solvent and a chain carbonate solvent, the mass ratio of the cyclic carbonate solvent in the electrolyte is 1.5-20%, and the mass ratio of the chain carbonate solvent in the electrolyte is 47-86.1%. CN 115 548 445 B belongs to the technical field of batteries, and in particular relates to a secondary battery. The secondary battery provided by the application includes a positive electrode sheet, a negative electrode sheet and an electrolyte, the electrolyte includes an organic solvent, and the organic solvent includes a cyclic ester solvent and a chain ester solvent. The study of Smart M. C. *et al.* discloses that the low-temperature performance of lithium-ion cells is mainly limited by the electrolyte solution, which not only determines the ionic mobility between electrodes but also strongly affects the nature of surface films formed on the carbonaceous anode. The surface films provide kinetic stability to the electrode (toward electrolyte) and permit charge (electron) transfer across them, which in turn determine the cycle life and rate capability of lithium-ion cells. Aiming at enhancing low-temperature cell performance. The study of SMART M. C. et al. "Electrolytes for low temperature Lithium batteries based on ternary mixtures of aliphatic carbonates", Journal of the electrochemical society, vol 146, no. 2, 1 February 1999, pages 486-492, has studied electrolyte solutions based on different ratios of alkyl carbonate solvent mixtures, *i.e.,* ethylene carbonate (EC), dimethyl carbonate (DMC), and diethyl carbonate (DEC), in terms of electrolyte conductivity, film resistance, film stability, and kinetics of lithium intercalation and deintercalation, at various temperatures.

### SUMMARY

With the continuous expansion of application scenarios, lithium-ion batteries are not only required to work normally in normal and high-temperature environments, but also need to be able to be adaptable to low-temperature environments. In view of the foregoing, the present disclosure provides a low-temperature electrolyte adaptable for low-temperature working environments. In order to maintain high ionic conductivity and low interface resistance at low temperatures, the electrolyte adopts a linear carboxylic acid ester solvent with a low-viscosity. In the meantime, high-temperature film-forming additives such as 1,3-Propanesultone (PS) are minimized or avoided to prevent low-temperature impedance from increasing. However, such low-temperature electrolytes have poor performance in high-temperature environments. The main reasons for this problem are as follows: first. Linear carboxylic acid ester solvents have poor chemical and electrochemical stability for electrode materials and lithium salts at high temperatures, such as lithium hexafluorophosphate (LiPF₆) in particular, which is the commonly used lithium salt. When linear carboxylic acid ester solvents are used for performing reaction with by-products produced by components such as LiPF₆ that decompose at high temperatures, reduction and gas production will occur; second. too little addition of high-temperature additives such as PS also affects the stability of the Solid Electrolyte Interface (SEI) in high-temperature environments. Therefore, low-temperature electrolytes that are able to adapt to low-temperature environments often produce more gas and lose active lithium salt in high-temperature environments, making them unable to adapt to high-temperature working environments.

The present disclosure provides a lithium-ion battery electrolyte, a lithium-ion battery and an electronic device. Through the lithium-ion battery electrolyte, the lithium-ion battery and the electronic device provided by the disclosure, it is possible to improve the performance of the lithium-ion battery in high-temperature environments while ensuring the adaptability of lithium-ion battery to low-temperature environments, thereby ultimately achieving lithium-ion batteries that take into account both cycle performance and storage performance in high-temperature environments and low-temperature environments, as well as enhancing the working performance and safety in use of lithium-ion batteries in various extreme environments.

In order to solve the above technical problems, the present disclosure provides a lithium-ion battery electrolyte, including following components:
a non-aqueous solvent, including a linear carboxylic acid ester solvent;
a lithium salt, at least one of which contains sulfur; and
an additive, including thiophene, and the content of the thiophene in the electrolyte is 0.1wt% to 3wt%, wherein the mass of sulfur in the lithium salt accounts for 26 wt% to 35 wt% of the total mass of the lithium salt.

In an embodiment of the present disclosure, the lithium salt includes at least one of lithium bisfluorosulfonimide, lithium bistrifluoromethanesulfonyl imide, lithium methyl((trifluoroboranyl)methyl)sulfonate, lithium fluorosulfonate, lithium trifluoromethanesulfonate, and lithium bis(pentafluoroethylsulfonyl)imide.

In an embodiment of the present disclosure, the lithium salt further includes lithium hexafluorophosphate and/or lithium difluoro(oxalato)borate .

In an embodiment of the present disclosure, the viscosity measured by Ubbelohde viscometer of the electrolyte at 5°C is 0.5mm²/s to 10.0mm²/s.

In an embodiment of the present disclosure, the non-aqueous solvent includes any one or more of ethylene carbonate, dimethyl carbonate, ethyl methyl carbonate, ethyl propionate, and diethyl carbonate, and the content of non-aqueous solvent in the electrolyte is 75wt% to 85wt%.

In an embodiment of the present disclosure, the non-aqueous solvent includes ethylene carbonate, ethyl methyl carbonate and ethyl propionate.

In an embodiment of the present disclosure, the content of the lithium salt in the electrolyte is 10wt% to 20wt%.

The present disclosure further provides a lithium-ion battery, including the above-mentioned lithium-ion battery electrolyte.

The present disclosure further provides an electronic device, including the above-mentioned lithium-ion battery.

To sum up, the present disclosure provides a lithium-ion battery electrolyte, a lithium-ion battery and an electronic device that may form a dense and high-temperature resistant SEI film on the surface of the negative electrode sheet. The SEI film contains a sulfonic acid group having a better high-temperature resistance and higher density with a better high-temperature stability, and may inhibit the reaction of negative electrode active lithium salt with SEI film and electrolyte at high temperatures, thus improving high-temperature storage performance. In the meantime, the sulfonic acid group in the formed SEI film has electronic insulation, better high-temperature stability, and lower electronic conductivity. Also, the sulfonic acid group may better assist the dissociation of lithium salts and transport lithium ions, thereby improving the high-temperature cycle performance of lithium-ion batteries. It is possible to ensure the ionic conductivity of the electrolyte while forming a dense SEI film, as well as improving the high-temperature cycle and high-temperature storage performance of lithium-ion batteries. In this way, while reducing the viscosity of the electrolyte at low temperatures, it may be ensured that lithium-ion batteries are adapted to low-temperature environments, and the performance thereof in high-temperature environments is improved, thereby ultimately achieving lithium-ion batteries that take into account both cycle performance and storage performance in high-temperature environments and low-temperature environments, as well as enhancing the working performance and safety in use of lithium-ion batteries in various extreme environments.

### DESCRIPTION OF THE EMBODIMENTS

The following describes the embodiments of the present disclosure through specific examples. Those skilled in the art may easily understand other advantages and effects of the present disclosure from the content disclosed in this specification. The present disclosure may also be implemented or applied through other different specific embodiments. Various details in this specification may also be modified or changed in various ways based on different viewpoints and applications without departing from the present disclosure.

It will be understood that the disclosure may be embodied in different forms and should not be construed as limited to the embodiments set forth herein. Rather, these embodiments are provided so that this disclosure will be thorough and complete, and will fully convey the scope of the disclosure to those skilled in the art.

The technical solution of the present disclosure will be further described in detail below with reference to the embodiments. Clearly, the described embodiments are only some of the embodiments of the present disclosure, rather than all the embodiments. Based on the embodiments of the present disclosure, all other embodiments obtained by those of ordinary skill in the art without any creative work fall within the scope to be protected by the present disclosure.

The present disclosure provides a lithium-ion battery. The lithium-ion battery is, for example, a primary battery or a secondary battery. The secondary battery is, for example, a soft pack battery, a square battery, or a cylindrical battery. The present disclosure does not specifically limit the type of the lithium-ion battery. Here, a square battery is taken as an example to describe the specific implementation of the present disclosure. In an embodiment of the present disclosure, a lithium-ion battery includes a housing and a bare cell disposed in the housing. The bare cell includes a positive electrode sheet, a separator, and a negative electrode sheet. The positive electrode sheet, the separator, and the negative electrode sheet are stacked in sequence in order to ensure that there is a separator between any positive electrode sheet and negative electrode sheet. A multi-layer laminate is obtained by winding or laminating, and is loaded into the battery housing as a bare cell. Finally, the electrolyte is injected into the housing once or multiple times so that the bare cell is completely immersed in the electrolyte.

In an embodiment of the present disclosure, the positive electrode sheet includes a positive electrode current collector and at least one positive electrode active substance layer coated on a surface at one side of the positive electrode current collector. Specifically, the positive electrode current collector is, for example, a foil material formed by surface treatment of nickel, titanium, aluminum, silver, stainless steel or carbon. In addition to foil materials, the positive electrode current collector may also be in the form of any one or more of film, mesh, porous, foam or non-woven fabrics. Specifically, the thickness of the positive electrode current collector is, for example, 8µm to 15µm. In this embodiment, the positive electrode current collector is, for example, aluminum foil, and the thickness of the aluminum foil is, for example, 13µm.

In an embodiment of the present disclosure, the positive electrode active substance layer includes a positive electrode active material, an adhesive, a conductive agent, etc. Specifically, the positive electrode active material may be any positive electrode active material for use in lithium-ion secondary batteries adaptable in low-temperature environments. In an embodiment of the present disclosure, the positive electrode active material is, for example, lithium iron phosphate (LiFePO₄). The adhesive is, for example, selected from any one or more of polyvinylidene fluoride (PVDF), poly(ethylene oxide) (PEO), polyamide (PA), polyacrylonitrile (PAN), polyacrylate, polyvinylether, polymethyl methacrylate (PMMA), ethylene-propylene-diene terpolymer (EPDM), polyhexafluoropropylene or polymerized styrene butadiene rubber (SBR). The conductive agent is, for example, selected from any one or more of conductive carbon black (Super P), acetylene black, carbon nanotubes, graphene, and the like.

In an embodiment of the present disclosure, the positive electrode active material is, for example, LiFePO₄, the adhesive is, for example, selected from polyvinylidene fluoride, and the conductive agent is, for example, selected from conductive carbon black. The positive electrode active material, the conductive agent, and the adhesive are, for example, mixed according to a mass ratio such as (90-98):(1-5):(1-5), an organic solvent is added and stirred under the action of a vacuum mixer until the system is uniform to obtain a positive electrode slurry. The organic solvent is, for example, selected from N-Methylpyrrolidone (NMP). The positive electrode slurry is evenly coated on the aluminum foil, and then dried at room temperature and then transferred to an oven for drying. The positive electrode sheet is obtained through processes such as cold pressing and slitting. In other embodiments, the positive electrode sheet may also be obtained by any other method of forming a positive electrode sheet.

In an embodiment of the present disclosure, the negative electrode sheet includes, for example, a negative electrode current collector and at least one negative electrode active substance layer coated on the surface at one side of the negative electrode current collector. The negative electrode current collector is, for example, selected from one of a copper foil current collector, a composite copper foil current collector, a carbon current collector, a foamed copper current collector or a stainless steel current collector. The thickness of the negative electrode current collector is, for example, 8µm to 15µm. In this embodiment, a copper foil is selected as the negative electrode current collector, and the thickness of the copper foil is, for example, 13µm.

In an embodiment of the present disclosure, the negative electrode active substance layer includes a negative electrode active material, a conductive agent, an adhesive, a thickener, and the like. Specifically, the negative electrode active material is a compound capable of intercalating and deintercalating lithium ions. In an embodiment of the present disclosure, the negative electrode active material is selected from carbon materials such as artificial graphite or natural graphite. The adhesive is, for example, any one or more selected from polyvinylidene fluoride, polyethylene oxide, polyamide, polypropylene, polyacrylate, polyvinyl ether, polymethylmethacrylate, polyhexafluoropropylene or styrene-butadiene rubber. The thickener is, for example, carboxymethyl cellulose sodium (CMC-Na), etc., and the conductive agent is, for example, any one or more selected from conductive carbon black, acetylene black, Ketjen black, carbon nanotubes, graphene, etc.

In an embodiment of the present disclosure, the negative electrode active material is selected from artificial graphite, the conductive agent is selected from conductive carbon black, the thickener is selected from sodium carboxymethylcellulose, and the adhesive is selected from styrene-butadiene rubber. In an embodiment of the present disclosure, artificial graphite, conductive agent, adhesive, and thickener carbon are mixed according to a mass ratio such as (90-96): (1-2): (1-3): (2-5). Deionized water is added and mixed evenly under the action of a vacuum mixer to obtain a negative electrode slurry. The negative electrode slurry is coated on the copper foil, then dried at room temperature and then transferred to an oven for drying. After cold pressing and slitting and the like are performed, the negative electrode sheet is obtained. In other embodiments, the negative electrode sheet may also be obtained by any other method of forming a negative electrode sheet.

In an embodiment of the present disclosure, the separator is, for example, polyethylene (PE) film, polypropylene (PP) film, glass fiber film or composite film, and the thickness of the separator is, for example, 9µm to 15µm.

In an embodiment of the present disclosure, the lithium-ion battery further includes an electrolyte that is injected and fills the entire internal space of the battery. The positive electrode sheet, the separator and the negative electrode sheet are completely immersed in the electrolyte. The electrolyte conducts ions, provides ion channels, maintain chemical stability and so on. The various components in the electrolyte may be substantially divided into non-aqueous solvents, lithium salts and additives according to their functions and amounts added. Non-aqueous solvents are used to dissolve lithium salts and additives; lithium salts are mainly used to provide lithium ions to form ion channels. In the entire electrochemical system of the battery, the directional movement of lithium ions and electrons generates electricity, and lithium salts have a great impact on the energy density, power density, wide electrochemical window, cycle life and safety performance of lithium batteries. As a small amount of substances added to the electrolyte, additives are of many types and each serve a different function. For example, additives may have different improvements in the high and low temperature performance, cycle performance, film-forming performance, etc. of the battery.

In an embodiment of the present disclosure, the lithium salt includes, for example, lithium hexafluorophosphate (LiPF₆), and the additives include film-forming additives such as ethylene sulfate (DTD), 1,3-propanesultone (PS), vinylene carbonate (VC), fluoroethylene carbonate (FEC) or vinyl ethylene carbonate (VEC). Non-aqueous solvents include at least one of cyclic carbonates, chain carbonates, ethers or carboxylic acid esters, among them, cyclic carbonate solvents may improve electrochemical stability and safety, but have poor compatibility with lithium. Chain carbonate solvents have lower viscosity than cyclic carbonate solvents and better electrochemical stability, so chain carbonate solvents are able to improve the low-temperature performance of the electrolyte, but they cannot be used alone. Ether solvents have low dielectric constant and low viscosity, so ether solvents are able to effectively increase the conductivity of the electrolyte. However, ether solvents have active chemical properties and poor antioxidant properties. Linear carboxylic acid ester solvents have low viscosity, and are able to maintain the high ionic conductivity and low interface resistance of the electrolyte at low temperatures. However, the use of high-temperature film-forming additives such as PS should be minimized or avoided in the additives to prevent the low-temperature resistance from increasing, but such low-temperature electrolytes have the problem of poor performance in high-temperature environments. Therefore, lithium-ion batteries may have better low-temperature performance by selecting the non-aqueous solvent in the electrolyte, but it is difficult to take into account both low-temperature performance and high-temperature performance.

The present disclosure provides a lithium-ion battery electrolyte, which at least includes a non-aqueous solvent, a lithium salt, and additives. The additives include thiophene, and the general structural formula of thiophene is as follows.

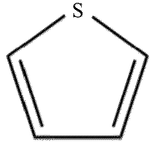

In an embodiment of the present disclosure, the content of thiophene in the electrolyte is, for example, 0.1wt% to 3wt%, or, for example, 0.5wt% to 1wt%, the endpoint values are also included. When the amount of thiophene is small, the small amount will affect the content of sulfur in the negative electrode solid electrolyte interface (SEI) during the film formation process, which in turn affects the density of the SEI film, and thus the high-temperature stability is influenced. When the amount of thiophene is large, the large amount will result in a decrease in the ionic conductivity of the electrolyte, in which case, the polarization will increase, and the directive current resistance (DCR) will increase significantly. Therefore, the amount of thiophene is controlled to ensure the improvement of high-temperature performance of lithium-ion batteries.

In an embodiment of the present disclosure, at least one of the lithium salts contains sulfur, and for example, includes a sulfur-containing lithium salt or a mixture of a sulfur-containing lithium salt and a non-sulfur-containing lithium salt, wherein the sulfur-containing lithium salt is defined as a lithium salt of which the molecular formula contains sulfur. In this embodiment, the non-sulfur-containing lithium salt is selected from at least one of lithium hexafluorophosphate (LiPF₆) or lithium difluoro(oxalato)borate (LiODFB), and the sulfur-containing lithium salt is selected from at least one of lithium bisfluorosulfonimide (LiFSI), lithium bistrifluoromethanesulfonyl imide (LiTFSI), lithium methyl((trifluoroboranyl)methyl)sulfonate, lithium fluorosulfonate, lithium trifluoromethanesulfonate (CF₃SO₃Li), lithium bis(pentafluoroethylsulfonyl)imide (LiBETI) and the like. When both thiophene and sulfur-containing lithium salt are included in the electrolyte, the sulfur-containing aromatic ring in thiophene and the graphite in the negative electrode interact through π-π bond stacking, synergizing the sulfur in thiophene and the sulfur-containing anion in the sulfur-containing lithium salt. The interaction may induce lithium salts to cooperate with thiophene to form a dense and high-temperature-resistant SEI film on the surface of the negative electrode sheet. The SEI film contains a sulfonic acid group having a better high-temperature resistance and higher density with a better high-temperature stability, and is able to supress the reaction between negative electrode active lithium, SEI film and electrolyte at high temperatures, thereby improving the high-temperature storage performance at 60°C. In the meantime, the sulfonic acid group in the formed SEI film has electronic insulation, better high-temperature stability, and lower electronic conductivity. Meanwhile, the sulfonic acid group may better assist the dissociation of lithium salts and transport lithium ions. Therefore, the high-temperature cycle performance at 45°C may be improved.

In an embodiment of the present disclosure, the content of lithium salt in the electrolyte is, for example, 10wt% to 20wt%, and the content of sulfur in the lithium salt is26wt% to 35wt%. That is, the mass of sulfur in the lithium salt accounts for 26wt% to 35wt% of the total mass of the lithium salt. In an embodiment of the present disclosure, all lithium salts in the electrolyte may be sulfur-containing lithium salts, or a mixture of sulfur-containing lithium salts and non-sulfur-containing lithium salts may be selected to control the content of sulfur in the lithium salt and ensure the density of the SEI film, thus ensuring the high-temperature performance of lithium-ion batteries. When the content of sulfur in the lithium salt is low, the content of sulfur of the SEI film will be affected in the forming process of the SEI film, which means the reduction of highly polar sulfur-containing functional groups such as sulfonic acid groups and sulfonylimide groups in the formed SEI film, which will lead to a reduction in the desolvation ability, thermodynamic stability and density of the SEI film and in turn affects the high-temperature stability of the lithium-ion battery. When the content of sulfur in the lithium salt is high, the density of the SEI film is very good at the circumstances, so the high-temperature cycle retention rate is high. However, if the density of the SEI film is too high, the desolvation process and conduction of lithium ions will be affected to some extent, and the DCR growth rate will be higher. Therefore, the content of sulfur in the lithium salt is controlled to allow the sulfur-containing anions in the lithium salt to interact synergistically with the sulfur-containing aromatic rings in thiophene, thereby improving high-temperature performance.

In an embodiment of the present disclosure, non-aqueous solvents include, for example, cyclic carbonates, chain carbonates, linear carboxylic acid ester solvents, etc., and include, for example, any one of ethylene carbonate (EC), dimethyl carbonate (DMC), ethyl methyl carbonate (EMC), ethyl propionate (EP) or diethyl carbonate (DEC), or a combination of at least two of the above, and the content of the non-aqueous solvent in the electrolyte is, for example, 75wt% to 85wt%. In an embodiment of the present disclosure, the non-aqueous solvent includes a mixture of ethylene carbonate, ethyl methyl carbonate and ethyl propionate, and the mass ratio of ethylene carbonate, ethyl methyl carbonate and ethyl propionate is, for example, 1:(4-6): (4-6). Since the electrolyte contains low-temperature electrolyte solvents such as chain carbonate solvent ethylene carbonate and linear carboxylate solvent ethyl propionate, it is possible to avoid problems such as reduced ionic conductivity and wettability of the electrolyte, thus facilitating operation of lithium-ion batteries at low temperatures. In an embodiment of the present application, the viscosity of the electrolyte at 5°C is, for example, 0.5 mm²/s to 10.0 mm²/s. Therefore, when the electrolyte obtained in the disclosure is applied to lithium-ion batteries, it may be ensured that the lithium-ion battery adapts to low-temperature environments while improving the operation thereof in high-temperature environments, and ultimately achieving lithium-ion batteries that take into account both cycle performance and storage performance in high-temperature environments and low-temperature environments, as well as enhancing the working performance and safety in use of lithium-ion batteries in various extreme environments.

In an embodiment of the present disclosure, in the preparation of the electrolyte, when the content of stable gases such as nitrogen or argon in the glove box is 99.999%, the content of actual oxygen in the glove box is less than or equal to 0.1 ppm, and the content of moisture is less than or equal to 0.1 ppm, after mixing the non-aqueous solvent evenly according to the mass ratio, the fully dried lithium salt is added to the above-mentioned non-aqueous solvent, and the additive is added to prepare a non-aqueous electrolyte for lithium-ion batteries. Except for the non-aqueous solvent, the contents of the lithium salt and additives are weight percentages calculated based on the total weight of the electrolyte.

In an embodiment of the present disclosure, the above-mentioned positive electrode sheet, separator, and negative electrode sheet are placed in sequence, so that the separator is between the positive electrode sheet and the negative electrode sheet to serve the isolation function, and the bare cell is obtained by winding or laminating. The bare cell is loaded into the housing, dried in a vacuum oven, and the electrolyte prepared in the present disclosure is injected into the bare cell and the bare cell is sealed. After performing at least standing, forming and volume separation, a lithium-ion secondary battery is obtained.

Hereinafter, the present disclosure will be explained more specifically by referring to examples, which should not be construed as limiting. Appropriate modifications can be made within the scope consistent with the gist of the present disclosure, and they all fall within the scope to be protected by the present disclosure.

### Example 1

Preparation of electrolyte: In an argon glove box with a moisture content of less than 1 ppm, 7g of ethylene carbonate, 38g of ethyl methyl carbonate and 38g of ethyl propionate were mixed, and dry mixed lithium salt was added to the mixed solvent. The mixed lithium salt includes 2g of lithium hexafluorophosphate, 1g of lithium difluoro(oxalato)borate , 11g of lithium bisfluorosulfonimide and 2g of lithium bistrifluoromethanesulfonyl imide. After the mixed lithium salt was dissolved, 1g of thiophene was added and mixed evenly to obtain the electrolyte. In the obtained electrolyte, the content of sulfur in the mixed lithium salt was 26.3wt%, and the viscosity of the electrolyte at 5°C was 1.93mm²/s.

Preparation of the positive electrode sheet: LiFePO₄, polyvinylidene fluoride, and conductive carbon black were mixed in a mass ratio of 98:1:1, and N-methylpyrrolidone was added and stirred under the action of a vacuum mixer until the system is uniform to obtain the positive electrode slurry. The positive electrode slurry was evenly coated on the aluminum foil, and then dried at room temperature and then transferred to an oven for drying. The positive electrode sheet was obtained through processes such as cold pressing and slitting.

Preparation of the negative electrode sheet: artificial graphite, conductive carbon black, sodium carboxymethylcellulose, and styrene-butadiene rubber were mixed in a mass ratio of 96:1:1:2, and deionized water was added and mixed evenly under the action of a vacuum mixer. The negative electrode slurry was obtained, and the negative electrode slurry was coated on the copper foil, and then dried at room temperature and transferred to an oven for drying. After cold pressing and slitting were performed, the negative electrode sheet was obtained.

Selection of the separator: a polyethylene film having a thickness of 12µm was selected as the separator.

Preparation of the battery: the positive electrode sheet, the separator, and the negative electrode sheet were stacked in order, so that the separator was disposed between the positive electrode sheet and the negative electrode sheet to serve the isolation function, and the stack was formed into the bare cell. Thereafter, the bare cell was placed in the square housing, dried in a vacuum oven, and the electrolyte prepared in the present disclosure was injected into the bare cell and the bare cell was sealed. After performing formation of the electrolyte, a lithium-ion secondary battery was obtained.

The battery cell was injected with electrolyte and formed in a glove box with a dew point controlled below -40°C. The above-mentioned electrolyte was injected into the battery through the injection hole. It is necessary to ensure that the amount of electrolyte is sufficient to fill the gaps in the battery, and the conventional formation for the first charge was carried out through following steps: charging was performed with 0.05C constant current for 3 minutes, 0.2C constant current for 5 minutes, 0.5C constant current for 25 minutes, after keeping stationary for 1 hour, charge was performed with 0.2C constant current to 3.65 V. After keeping stationary at room temperature for 24 hours, discharging was performed with 0.2C constant current to 2.5 V.

### Example 2

The mass of thiophene was 0.1g, and other steps were consistent with those in Example 1.

### Example 3

The mass of thiophene was 0.25g, and other steps were consistent with those in Example 1.

### Example 4

The mass of thiophene was 0.5g, and other steps were consistent with those in Example 1.

### Example 5

The mass of thiophene was 0.75g, and other steps were consistent with those in Example 1.

### Example 6

The mass of thiophene was 1.5g, and other steps were consistent with those in Example 1.

### Example 7

The mass of thiophene was 3g, and other steps were consistent with those in Example 1.

### Example 8

The mixed lithium salt was composed of 3g of lithium hexafluorophosphate, 0.5g of lithium difluoro(oxalato)borate and 12.5g of lithium bisfluorosulfonimide, wherein the content of sulfur in the mixed lithium salt was 26.8wt%. Other operations are the same as those in Example 4.

### Example 9

The mixed lithium salt was composed of 3.5g of lithium hexafluorophosphate and 12.5g of lithium bisfluorosulfonimide, wherein the content of sulfur in the mixed lithium salt was 26.8wt%. Other operations are the same as those in Example 4.

### Example 10

The mixed lithium salt was composed of 2g of lithium hexafluorophosphate and 14g of lithium bisfluorosulfonimide, wherein the content of sulfur in the mixed lithium salt was 30.0wt%. Other operations are the same as those in Example 4.

### Example 11

The mixed lithium salt was composed of 16g of lithium bisfluorosulfonimide, wherein the content of sulfur in the mixed lithium salt was 34.2wt%. Other operations are the same as those in Example 4.

### Comparative Example 1

No thiophene was added, and other steps remained the same as those in Example 1.

### Comparative Example 2

The mass of thiophene was 6g, and other steps were consistent with those in Example 1.

### Comparative Example 3

The mixed lithium salt was composed of 16g of lithium hexafluorophosphate and no other lithium salts were used, wherein the content of sulfur in the mixed lithium salt was 0wt%. Other operations are the same as those in Example 1.

### Comparative Example 4

The mixed lithium salt was composed of 7g of lithium hexafluorophosphate, 1g of lithium difluoro(oxalato)borate , 7g of lithium bisfluorosulfonimide, and 1g of lithium bistrifluoromethanesulfonyl imide, wherein the content of sulfur in the mixed lithium salt was 16.4wt%. Other operations are the same as those in Example 1.

In the present disclosure, lithium-ion batteries were prepared using different ratios of electrolyte in Examples 1 to 11 and Comparative Examples 1 to 4, and the performance of the lithium-ion batteries was tested. The test results are shown in Table 1.

In an embodiment of the present disclosure, when testing the viscosity of the electrolyte at 5°C, the Ubbelohde viscometer was placed on a horizontal table and check whether the Ubbelohde viscometer is clean and intact. Then the Ubbelohde viscometer was cleaned with dimethyl carbonate (DMC) solution. The Ubbelohde viscometer was turned on and placed into the electrolyte to be measured, and kept stationary for a preset time. When the temperature of the electrolyte stabilized at 5°C and the Ubbelohde viscometer was completely immersed in the electrolyte. Then, the adjusting screw was adopted to adjust the position of the scale line so that the scale line was flush with the liquid level. The Ubbelohde viscometer was taken out from the electrolyte and quickly rotated by 180°, and then the distance passed through by the scale line within 60 seconds was recorded to obtain the viscosity value of the liquid. The Ubbelohde viscometer was cleaned after use, disinfected and maintained with pure water or other appropriate solutions, and then stored in a dry and ventilated place.

In an embodiment of the present disclosure, the cycle performance test at 45°C was performed by charging the formed battery to 3.65V using 3C constant current and constant voltage at 45°C, then discharging the battery to 2.5V using 3C constant current. After 500 charge-discharge cycles were completed, the discharge capacity retention rate of the 500th cycle was calculated.

In an embodiment of the present disclosure, the 60°C storage DCR test was performed by charging the formed battery to 3.65V using 1C constant current and constant voltage at room temperature, then discharging the battery to 50% SOC at 1C. Then the battery was discharged at 3C for 10 seconds to test DCR, and the value was recorded as DCR₀. Then the battery was discharged to 2.5V at 1C, and charged to 3.65V at 1C constant current and constant voltage, and stored at 60°C for 30 days. After the battery was cooled to normal temperature, the same conditions were adopted to test the DCR, which was recorded as DCR₁₅. The DCR growth rate in storage is (DCR₁₅/DCR₀-1)*100%.

**Table 1. Performance test results of lithium-ion batteries in Examples 1-11 and Comparative Examples 1-4**

| Group | Thiophene (g) | Types of lithium salt and mixing ratio | Content of sulfur in mixed lithium salts | Viscosity of electrolyte at 5°C(mm²/s) | Capacity retention rate @45°Cafter 500 cycles | DCR growth rate @60°C after 30 days |
|---|---|---|---|---|---|---|
| Example 1 | 1.0 | LiPF₆:LiODFB:LiFSI:LiTF SI=2:1:11:2 | 26.3wt% | 1.93 | 97.8% | 0.6% |
| Example 2 | 0.1 | LiPF₆:LiODFB:LiFSI:LiTF SI = 2:1:11:2 | 26.3wt% | 1.98 | 97.0% | 2.7% |
| Example 3 | 0.25 | LiPF₆:LiODFB:LiFSI:LiTF SI = 2:1:11:2 | 26.3wt% | 1.99 | 97.4% | 2.4% |
| Example 4 | 0.5 | LiPF₆:LiODFB:LiFSI:LiTF SI = 2:1:11:2 | 26.3wt% | 1.97 | 98.0% | 0.7% |
| Example 5 | 0.75 | LiPF₆:LiODFB:LiFSI:LiTF SI = 2:1:11:2 | 26.3wt% | 1.98 | 97.7% | 1.0% |
| Example 6 | 1.5 | LiPF₆:LiODFB:LiFSI:LiTF SI = 2:1:11:2 | 26.3wt% | 1.94 | 97.3% | 2.3% |
| Example 7 | 3.0 | LiPF₆:LiODFB:LiFSI:LiTF SI = 2:1:11:2 | 26.3wt% | 1.88 | 97.1% | 3.5% |
| Example 8 | 0.5 | LiPF₆:LiODFB:LiFSI = 3.:0.5:12.5 | 26.8wt% | 2.06 | 98.1% | 0.7% |
| Example 9 | 0.5 | LiPF₆:LiFSI = 3.5:12.5 | 26.8wt% | 2.04 | 98.1% | 0.8% |
| Example 10 | 0.5 | LiPF₆:LiFSI = 2:14 | 30.0wt% | 2.01 | 98.0% | 1.5% |
| Example 11 | 0.5 | LiFSI | 34.2wt% | 2.10 | 97.8% | 3.0% |
| Comparative Example 1 | 0 | LiPF₆:LiODFB:LiFSI:LiTF SI = 2:1:11:2 | 26.3wt% | 2.02 | 84.3% | 35% |
| Comparative Example 2 | 6 | LiPF₆:LiODFB:LiFSI:LiTF SI = 2:1:11:2 | 26.3wt% | 1.87 | 91.7% | 8.9% |
| Comparative Example 3 | 1 | LiPF₆ | 0% | 1.99 | 85.0% | 32% |
| Comparative Example 4 | 1 | LiPF₆:LiODFB:LiFSI:LiTF SI = 7:1:7:1 | 16.2wt% | 2.11 | 92.2% | 8.5% |

Please refer to Table 1. Comparing Examples 1-11 and Comparative Examples 1-4, it can be seen that the viscosity of the electrolyte at 5°C is low, so it is possible for the lithium-ion batteries to work in low-temperature environments. Comparing Examples 1-11 and Comparative Example 1, it can be seen that after thiophene is added to the electrolyte, the sulfur-containing aromatic ring in the thiophene and the graphite in the negative electrode are conjugated through π-π bonds, synergizing with the interaction between the sulfur in the thiophene and sulfur-containing anions in lithium salts, so it is possible to induce lithium salt to cooperate with thiophene to form a SEI film with high density and good high-temperature resistance on the surface of the negative electrode sheet. In this way, the SEI film contains a sulfonic acid group that is more resistant to high temperatures, denser and electronically insulating, so the high-temperature capacity retention rate of lithium-ion batteries is higher. In addition, while improving high-temperature stability, the sulfonic acid group may better assist in the dissociation of lithium salt and the transport of lithium ions, so the DCR growth rate in high-temperature storage is low. In absence of thiophene, the sulfur-containing lithium salt is free in the electrolyte and is difficult to participate in the film formation on the surface of the negative electrode sheet. Therefore, the stability of the SEI film is poor at high temperatures, resulting in a reduction in capacity retention rate and an increase in the DCR growth rate in high-temperature storage.

Please refer to Table 1. Comparing Examples 1-11 and Comparative Example 3, it can be seen that when there is no sulfur-containing lithium salt in the electrolyte to participate in the film formation on the surface of the negative electrode sheet, the stability of the SEI film at high temperatures is poor, resulting in reduction of high-temperature capacity retention rate, and the DCR growth rate increases in high-temperature storage. Therefore, the use of both thiophene and sulfur-containing lithium salts may facilitate formation of a dense SEI film and improve the high-temperature performance of lithium-ion batteries.

Please refer to Table 1. Comparing Examples 1-7, it can be seen that when the content of sulfur in the lithium salt is fixed, the increase in the amount of thiophene has an impact on the technical effect. As the amount of thiophene increases, the high-temperature capacity retention rate of lithium-ion batteries first increases and then decreases, and the DCR growth rate in high-temperature storage first decreases and then increases. Therefore, reducing the amount of thiophene will affect the content of sulfur in the SEI film formation process, affect the density of the SEI film, and thus affect the high-temperature stability. Increasing the amount of thiophene will lead to a decrease in the ionic conductivity of the electrolyte and a significant increase in DCR growth rate in high-temperature storage. Therefore, the use of thiophene is controlled to ensure the improvement of lithium-ion battery performance.

Please refer to Table 1. Comparing Example 4 and Examples 8-9, it can be seen that when different lithium salt ratios apply to the mixed lithium salt, with the same content of sulfur and the same amount of thiophene, the high-temperature capacity retention rate of lithium-ion batteries is similar to the DCR growth rate in high-temperature storage. Therefore, when the content of thiophene and the content of sulfur in the mixed lithium salt are the same, the formed SEI films have similar density and similar high-temperature stability.

Please refer to Table 1. Comparing Examples 1, 8, 10 and 11, it can be seen that when the content of sulfur is different in different mixed lithium salts, and when the content of sulfur in the lithium salt increases, the high-temperature capacity retention rates of lithium-ion batteries are similar, but the increase in the DCR growth rate in high-temperature storage indicates that the formed SEI film is very dense, so the high-temperature cycle retention rate is high. However, the high density of the SEI film causes the desolvation process and conduction of lithium ions to be affected, and the DCR growth rate in high-temperature storage is high. Specifically, an extreme case is discussed in Example 11, where only lithium salt LiFSI containing a large amount of sulfur is used. Under the circumstances, the density of the SEI film is very good and the high-temperature cycle retention rate is high, but the desolvation process and conduction of lithium ions are affected to some extent, and the DCR growth rate in high-temperature storage is high. Therefore, the content of sulfur in the lithium salt is controlled to simultaneously improve the high-temperature cycle and high-temperature storage performance of lithium-ion batteries.

Please refer to Table 1. Comparing Examples 1-11 and Comparative Example 2, it can be seen that when excessive amount of thiophene is added, the ability of the electrolyte to dissociate and conduct lithium ions is reduced, polarization is increased, and the DCR growth rate of high-temperature storage is increased. Comparing Examples 1-11 and Comparative Example 4, it can be seen that when the content of sulfur in the mixed lithium salt is low, the content of sulfur during the SEI film formation process is low, and the density and strength of the SEI film cannot be effectively improved, resulting in low high-temperature capacity retention rate, and the DCR growth rate is high in high-temperature storage.

The present disclosure further provides an electrical device, which includes at least one lithium-ion battery as described above, and the lithium-ion batteries are used to provide electrical energy. Electrical devices may be vehicles, cell phones, portable devices, laptops, ships, spacecraft, electric toys and power tools, etc. In an embodiment of the disclosure, vehicles may be new energy vehicles, and new energy vehicles may be pure electric vehicles, hybrid vehicles or extended-range vehicles, etc.; spacecraft include aircraft, rockets, space shuttles, spaceships, etc.; electric toys include fixed type or mobile electric toys, such as game consoles, electric toy cars, electric toy ships and electric toy airplanes, etc.; electric tools include metal cutting electric tools, grinding electric tools, assembly electric tools and railway electric tools, for example, electric drills, electric grinders, electric wrenches, electric screwdrivers, electric hammers, impact drills, concrete vibrators, planers and more. The electronic device includes the above-mentioned lithium-ion battery, and therefore includes the advantages of the above-mentioned lithium-ion battery, and the details will not be elaborated here.

In summary, the present disclosure provides a lithium-ion battery electrolyte, a lithium-ion battery and an electronic device. By adding thiophene and lithium salts including sulfur-containing lithium salts to the electrolyte, it is possible to form the dense SEI film with good high-temperature resistance on the surface of the negative electrode sheet. The SEI film contains a sulfonic acid group that has a better high-temperature resistance and density with better high-temperature stability. In this way, it is possible to supress the reaction between negative electrode active lithium, SEI film and electrolyte at high temperatures, thereby improving the high-temperature storage performance. In the meantime, the sulfonic acid group in the formed SEI film has electronic insulation, better high-temperature stability, and lower electronic conductivity. Also, the sulfonic acid group may better assist the dissociation of lithium salts and transport lithium ions, thus improving high temperature cycle performance. By controlling the content of sulfur in thiophene and lithium salts, it is possible to ensure the formation of a dense SEI film, ensure the ionic conductivity of the electrolyte, and improve the high-temperature cycle and high-temperature storage performance of lithium-ion batteries. By controlling the selection of non-aqueous solvents and reducing the viscosity of the electrolyte at low temperatures, it is possible for lithium-ion battery to operate well in both low-temperature and high-temperature environments, thereby expanding the application scenarios of lithium-ion batteries, and improving the safety of use of lithium-ion batteries in extreme environments.

## Claims

1. A lithium-ion battery electrolyte, comprising following ingredients:
a non-aqueous solvent comprises a linear carboxylic acid ester solvent;
a lithium salt, wherein at least one of which containing sulfur; and an additive comprising thiophene, wherein a content of the thiophene in the electrolyte is 0.1wt% to 3wt%,**characterized in that** the mass of sulfur in the lithium salt accounts for 26wt% to 35 wt% of the total mass of the lithium salt.

2. The lithium-ion battery electrolyte according to claim 1, wherein the lithium salt comprises at least one of lithium bisfluorosulfonimide, lithium bistrifluoromethanesulfonyl imide, lithium methyl((trifluoroboranyl)methyl)sulfonate, lithium fluorosulfonate, lithium trifluoromethanesulfonate, and lithium bis(pentafluoroethylsulfonyl)imide.

3. The lithium-ion battery electrolyte according to claim 2, wherein the lithium salt further comprises lithium hexafluorophosphate and/or lithium difluoro(oxalato)borate.

4. The lithium-ion battery electrolyte according to claim 1, wherein a viscosity measured by Ubbelohde viscometer of the electrolyte at 5°C is 0.5mm²/s to 10.0mm²/s.

5. The lithium-ion battery electrolyte according to claim 1, wherein the non-aqueous solvent comprises any one or more of ethylene carbonate, dimethyl carbonate, ethyl methyl carbonate, ethyl propionate, and diethyl carbonate, and a content of the non-aqueous solvent in the electrolyte is 75wt% to 85wt%.

6. The lithium-ion battery electrolyte according to claim 5, wherein the non-aqueous solvent comprises ethylene carbonate, ethyl methyl carbonate and ethyl propionate.

7. The lithium-ion battery electrolyte according to claim 1, wherein a content of the lithium salt in the electrolyte is 10wt% to 20wt%.

8. A lithium-ion battery, comprising the lithium-ion battery electrolyte according to any one of claims 1 to 7.

9. An electronic device, comprising the lithium-ion battery according to claim 8.

## Patentansprüche

1. Elektrolyt für eine Lithium-Ionen-Batterie, umfassend die folgenden Bestandteile:
ein nichtwässriges Lösungsmittel, das ein lineares Carbonsäureester-Lösungsmittel umfasst;
ein Lithiumsalz,
wobei mindestens eines davon Schwefel enthält; und
ein Additiv, das Thiophen umfasst, wobei ein Gehalt an Thiophen in dem Elektrolyten 0,1 Gew.-% bis 3 Gew.-% beträgt,
**dadurch gekennzeichnet, dass**
die Masse an Schwefel in dem Lithiumsalz 26 Gew.-% bis 35 Gew.-% der Gesamtmasse des Lithiumsalzes ausmacht.

2. Elektrolyt für eine Lithium-Ionen-Batterie nach Anspruch 1, wobei das Lithiumsalz mindestens eines umfasst von Lithiumbisfluorsulfonimid, Lithiumbistrifluormethansulfonylimid, Lithiummethyl((trifluorboranyl)methyl)sulfonat, Lithiumfluorsulfonat, Lithiumtrifluormethansulfonat und Lithiumbis(pentafluorethylsulfonyl)imid.

3. Elektrolyt für eine Lithium-Ionen-Batterie nach Anspruch 2, wobei das Lithiumsalz ferner Lithiumhexafluorophosphat und / oder Lithiumdifluor(oxalato)borat umfasst.

4. Elektrolyt für eine Lithium-Ionen-Batterie nach Anspruch 1, wobei eine mit einem Ubbelohde-Viskosimeter gemessene Viskosität des Elektrolyten bei 5 °C 0,5 mm²/s bis 10,0 mm²/s beträgt.

5. Elektrolyt für eine Lithium-Ionen-Batterie nach Anspruch 1, wobei das nichtwässrige Lösungsmittel eines oder mehrere umfasst von Ethylencarbonat, Dimethylcarbonat, Ethylmethylcarbonat, Ethylpropionat und Diethylcarbonat, und ein Gehalt des nichtwässrigen Lösungsmittels in dem Elektrolyten 75 Gew.-% bis 85 Gew.-% beträgt.

6. Elektrolyt für eine Lithium-Ionen-Batterie nach Anspruch 5, wobei das nichtwässrige Lösungsmittel Ethylencarbonat, Ethylmethylcarbonat und Ethylpropionat umfasst.

7. Elektrolyt für eine Lithium-Ionen-Batterie nach Anspruch 1, wobei ein Gehalt an Lithiumsalz in dem Elektrolyten 10 Gew.-% bis 20 Gew.-% beträgt.

8. Lithium-Ionen-Batterie, umfassend den Elektrolyten für eine Lithium-Ionen-Batterie gemäß einem der Ansprüche 1 bis 7.

9. Elektronisches Gerät, umfassend die Lithium-Ionen-Batterie nach Anspruch 8.

## Revendications

1. Électrolyte pour batterie lithium-ion, comprenant les ingrédients suivants :
un solvant non aqueux comprenant un solvant à base d'ester d'acide carboxylique
linéaire; un sel de lithium, dont au moins un contient du soufre ; et
un additif comprenant du thiophène, la teneur en thiophène dans l'électrolyte étant comprise entre 0,1 % et 3 % en poids, **caractérisé en ce que** la masse de soufre dans le sel de lithium représentant entre 26 % et 35 % de la masse totale du sel de lithium.

2. L'électrolyte pour batterie lithium-ion selon la revendication 1, dans lequel le sel de lithium comprend au moins l'un des composés suivants : le bisfluorosulfonimide de lithium, le bistrifluorométhanesulfonylimide de lithium, le méthyl((trifluoroboranyl)méthyl)sulfonate de lithium, le fluorosulfonate de lithium, le trifluorométhanesulfonate de lithium et le bis(pentafluoroéthylsulfonyl)imide de lithium.

3. Électrolyte pour batterie lithium-ion selon la revendication 2, dans lequel le sel de lithium comprend en outre de l'hexafluorophosphate de lithium et/ou du difluoro(oxalato)borate de lithium.

4. Électrolyte pour batterie lithium-ion selon la revendication 1, dans lequel la viscosité de l'électrolyte, mesurée à l'aide d'un viscosimètre Ubbelohde à 5 °C, est comprise entre 0,5 mm²/s et 10,0 mm²/s.

5. Électrolyte pour batterie lithium-ion selon la revendication 1, dans lequel le solvant non aqueux comprend un ou plusieurs des composés suivants : carbonate d'éthylène, carbonate de diméthyle, carbonate d'éthylméthyle, propionate d'éthyle et carbonate de diéthyle, et la teneur en solvant non aqueux dans l'électrolyte est comprise entre 75 % et 85 % en poids.

6. Électrolyte pour batterie lithium-ion selon la revendication 5, dans lequel le solvant non aqueux comprend du carbonate d'éthylène, du carbonate d'éthylméthyle et du propionate d'éthyle.

7. Électrolyte pour batterie lithium-ion selon la revendication 1, dans lequel la teneur en sel de lithium dans l'électrolyte est comprise entre 10 % et 20 % en poids.

8. Batterie lithium-ion, comprenant l'électrolyte de batterie lithium-ion selon l'une quelconque des revendications 1 à 7.

9. Dispositif électronique, comprenant la batterie lithium-ion selon la revendication 8.
